# EUROPÄISCHE PATENTANMELDUNG

(11) **EP 1 143 171 A2**
(43) Veröffentlichungstag der Anmeldung: **10.10.2001**
(21) Anmeldenummer: 01107580.1
(22) Anmeldetag: 27.03.2001
(51) Int. Cl.: F16H 61/02

(54) **Verfahren zur Bereitstellung einer Mehrzahl unterschiedlicher Schaltprogramme und Steuervorrichtung**

(30) Priorität: 04.04.2000 DE 10016373
(71) Anmelder: Voith Turbo GmbH & Co. KG, 89522 Heidenheim (DE)
(72) Erfinder: Depping, Herbert, 89537 Giengen (DE); Dietzel, Bernd, 89428 Syrgenstein (DE)
(74) Vertreter: Dr. Weitzel & Partner

(57) **Zusammenfassung**

Die Erfindung betrifft ein Verfahren zur Bereitstellung einer Mehrzahl unterschiedlicher Schaltprogramme zur Steuerung des Wechsels zwischen unterschiedlichen Gangstufen einer Getriebebaueinheit in Abhängigkeit von verschiedenen, auf die Betriebsweise des Fahrzeuges, insbesondere des Fahrverhaltens einflußnehmenden Größen, bei welchem die, wenigstens ein Basisschaltprogramm charakterisierenden Kennwerte fest vorgegeben sind und die Kennwerte jedes weiteren theoretisch möglichen Schaltprogrammes durch Setzen eines Kennwert-Offsets erzeugbar sind.

## Beschreibung

Die Erfindung betrifft ein Verfahren zur Bereitstellung einer Mehrzahl unterschiedlicher Schaltprogramme zur Steuerung des Wechsels zwischen unterschiedlichen Gangstufen einer Getriebebaueinheit in Abhängigkeit von verschiedenen, auf die Betriebsweise des Fahrzeuges, insbesondere des Fahrverhaltens einflußnehmenden Größen; ferner eine Steuervorrichtung zur Durchführung des Verfahrens.

In Antriebssträngen, insbesondere in Antriebssträngen mit Automatgetrieben, erfolgt die Ansteuerung der Betätigungselemente zum Wechsel zwischen zwei Gangstufen in Abhängigkeit von Schaltprogrammen automatisiert, wobei dabei beispielsweise zwischen Schaltprogrammen mit festen Umschaltpunkten oder einfachen beschleunigungsabhängigen Schaltprogrammen unterschieden werden kann. Für den Kraftstoffverbrauch sind die Drehzahlen bei Hochschaltungen maßgeblich. Hochschaltungen erfolgen dabei in der Regel immer bei etwa 60 bis 100 % der Motornenndrehzahl. Bei höheren Schaltdrehzahlen wird die größere Motorleistung zur besseren Fahrzeugbeschleunigung ausgenutzt, was in ansteigendem Gelände oder bei großer Personenbesetzung eines Fahrzeuges, insbesondere beim Einsatz der Automatgetriebe in Bussen, erforderlich sein kann. Allerdings ergibt sich dabei auch ein höherer Kraftstoffverbrauch, weil die Antriebsmaschine in der Regel bei höherer Drehzahl in einem ungünstigeren Kennwertbereich arbeitet. In Steigungen können trotz Vollgas (Vollast) auch Rückschaltungen auftreten, wenn das verfügbare Drehmoment nicht ausreicht, um die momentane Geschwindigkeit zu halten. Um dabei ein Pendeln zwischen den einzelnen Gangstufen zu vermeiden, liegen die Rückschaltungen im allgemeinen bei niedrigeren Drehzahlen als die Hochschaltungen. Schaltprogramme mit festen Schaltpunkten haben den Nachteil, daß sie die Beladung des Fahrzeuges oder Steigungen nicht berücksichtigen können. Bei verbrauchsoptimierten Schaltprogrammen (niedrige Schaltdrehzahleh) läßt die zur Verfügung stehende Leistung beim Befaaahren von Steigungen zu wünschen übrig, während bei leistungsorientierten Schaltprogrammen (hohe Schaltdrehzahlen) die Leistung beim Fahren in der Ebene nicht benötigt wird und der Kraftstoffverbrauch deutlich höher ist. Zur Berücksichtigung des Beschleunigungs- und Verzögerungsverhaltens bei allen Fahrzuständen wurden daher beschleunigungsabhängige Schaltprogramme entwickelt. Ein derartiges beschleunigungsabhängiges Schaltprogramm ist beispielsweise aus der Druckschrift DE 195 16 948 A1 bekannt. Bei diesem erfolgt der Umschaltvorgang zwischen zwei Gangstufen beschleunigungsabhängig. Dabei wird je nach Erfordernis bzw. Fahrwiderstand bei kleineren oder größeren Antriebs- bzw. Motordrehzahlen geschaltet, je nach dem, ob niedriger Kraftstoffverbrauch oder eine ausreichende Beschleunigung bevorzugt wird. Für den Schaltpunkt selbst ist die Beschleunigung des Fahrzeuges bzw. dessen Verzögerung maßgebend. Dabei werden immer die zwei folgenden Grenzfahrzustände bzw. Beschleunigungen berücksichtigt:
1. geringe Fahrzeugbelegung in ebenem oder abschüssigem Gelände = hohe Fahrzeugbeschleunigung und
2. hohe Fahrzeugbelegung bei ansteigendem Gelände = geringe Fahrzeugbeschleunigung.

Im erstgenannten Fall ergibt sich eine hohe Fahrzeugbeschleunigung bei niedrigen Antriebsdrehzahlen. Eine Hochschaltung der Gänge kann daher bereits frühzeitig bei relativ niedriger Motordrehzahl erfolgen, was zu einer Senkung des Kraftstoffverbrauches führt. Aus dem gleichen Grund erfolgt auch die Rückschaltung der Gänge bei kleinerer Verzögerung mit niedriger Motordrehzahl. Im zweiten Fall ist eine größere Motorleistung erforderlich, d.h. daß die Hochschaltung erst bei einer relativ großen Motordrehzahl eingeleitet wird. In Abhängigkeit von der gemessenen Fahrzeugbeschleunigung bzw. - Verzögerung erfolgt die Hoch- oder Rückschaltung der Gänge zwischen diesen beiden Fahrzuständen gleitend, d.h. in einem Schaltdrehzahlbereich. Der Schaltdrehzahlbereich selbst ist außerdem von der Laststufe abhängig. Die Laststufe kann entweder die Fahrpedalstellung oder das Moment der Antriebsmaschine, insbesondere das Motormoment repräsentieren.

Darüberhinaus besteht die Möglichkeit, jedes beschleunigungsabhängige Schaltverfahren noch zu variieren durch verbrauchsorientierte oder leistungsorientierte beschleunigungsabhängige Schaltverfahren. Bei den normalen beschleunigungsabhängigen Schaltverfahren werden die Hoch- und Rückschaltungen gegenüber den anderen Programmen mit dem gesamt möglichen Schaltdrehzahlbereich eingeleitet. Bei einer verbrauchsorientierten beschleunigungsabhängigen Schaltversion liegen die Schaltdrehzahlen aus Kraftstoffverbrauchsgründen bezogen auf den gesamten theoretisch möglichen Schaltdrehzahlbereich verhältnismäßig niedrig. Der Schaltdrehzahlbereich wird daher relativ klein eingestellt und ist zu geringen Antriebs- bzw. Motordrehzahlen hin verschoben. Im Gegensatz dazu liegen dann die Schaltdrehzahlen bei leistungsorientierten beschleunigungsabhängigen Schaltverfahren bezogen auf den gesamten, theoretisch möglichen Schaltdrehzahlbereich relativ hoch.

Die einzelnen, die Schaltverfahren charakterisierenden Kennwerte werden dabei entweder in der Steuereinrichtung der Getriebebaueinheit bzw. einer anderen gemeinsam von mehreren Komponenten genutzten oder einer dieser übergeordneten Steuereinrichtung abgelegt. In der Praxis hat sich jedoch gezeigt, daß auch diese einzelnen Varianten nicht immer für den gesamten häufig genutzten Geschwindigkeitsbereich und unter dem Einfluß einer Vielzahl unterschiedlicher Einflußfaktoren ausreichend sind. Daher werden zunehmend zur Getriebebaueinheit eine Vielzahl von Schaltprogrammen angeboten, welche entweder vom Nutzer wählbar sind oder aber entsprechend den vorliegenden Randbedingungen für den Hauptanwendungsbereich festgesetzt werden. Ein Wechsel dieser Schaltprogramme ist möglich. Die einzelnen Schaltprogramme sind dabei in der Steuereinrichtung der Getriebebaueinheit, einer dieser übergeordneten Steuereinrichtung oder einer anderen Steuereinrichtung, welche mit den Betätigungselementen der Getriebebaueinheit koppelbar ist, hinterlegt, desweiteren ist der Anwender hinsichtlich der Auswahl des geeigneten Programmes auf die Beratung des Herstellers bzw. Entwicklers des Schaltverfahrens angewiesen. Erschwert wird dies bei beschleunigungsabhängigen Schaltverfahren, die dadurch charakterisiert sind, daß über den Geschwindigkeitsbereich zusätzlich zwischen einzelnen Laststufen unterschieden wird.

Verfahren zur Bereitstellung von Schaltprogrammen aus einem Basisschaltprogramm sind aus den Druckschriften:
1. F.Tinschert, G. Wagner, R. Wüst: "Arbeitsweise und Beeinflußungsmöglichkeiten von Schaltprogrammen automatsicher Fahrzeuggetriebe", VDI-Bericht Nr. 1175, 1995, Seite 185-203
2. R. Rösch, G. Wagner: "Die elektronische Steuerung des automatischen Getriebes W5A 330/580 von Mercedes-Benz" ATZ 97, 195, Nr. 11, Seite 736-748
vorbekannt. Bei den in diesen Druckschriften beschriebenen Verfahren handelt es sich um eine stufenlose Verschiebung eines Grundschaltprogrammes, das mit Hilfe von Beeinflußungsgrößen optimal an den momentanen Fahrzustand angepaßt werden kann. Dabei wird nur ein einziges Schaltprogramm abgespreichert, das sogenannte Grundschaltprogramm. Dieses ist derart ausgelegt, das es den am häufigsten vorkommenden Fahrzustand angepaßt ist. Während der Fahrt überwacht die elektronische Getriebesteuerung ständig den momentanen Betriebszustand des Fahrzeuges und das Verhalten des Fahrers. Tritt eine Änderung ein, wird diese ausgewertet und bei Bedarf das Grundschaltprogramm stufenlos an die geänderte Fahrsituation angepaßt, wobei die Änderungen rechnerisch ermittelt werden. Der Nachteil einer derartigen Lösung besteht im wesentlichen darin, daß hier eine Reihe von Einflußgrößen zugrundegelegt werden, die fortlaufend ermittelt werden müssen und für die Berechnung der Änderung der Schaltkennlinien eine bedeutende Rolle spielen. Doch ist diese Änderung immer an die konkrete Änderung der einzelnen Parameter gebunden.

Der Erfindung liegt daher die Aufgabe zugrunde, ein Verfahren zur Bereitstellung einer Vielzahl von Schaltprogrammen zu entwickeln, welches schnelle Zugriffszeiten erlaubt, ohne mathematische Operationen für die Bestimmung von Schaltkennlinien auskommt und desweiteren keine erhöhten Anforderungen an den vorhandenen Speicherplatz in der Steuereinrichtung der Getriebebaueinheit bzw. einer dieser übergeordneten Steuereinrichtung oder nebengeordneten Steuereinrichtung stellen. Die konstruktive Umsetzung soll sich dabei durch einen geringen Aufwand und einfache transparente Auswahlmöglichkeiten durch den Anwender auszeichnen.

Die erfindungsgemäße Lösung ist durch die Merkmale des Anspruchs 1 charakterisiert. Vorteilhafte Ausgestaltungen sind in den Unteransprüchen wiedergegeben. Die vorrichtungsmäßige Umsetzung wird durch die Merkmale des Anspruchs 15 beschrieben.

Erfindungsgemäß ist das Verfahren zur Bereitstellung einer Mehrzahl unterschiedlicher Schaltprogramme zur Steuerung des Wechsels zwischen unterschiedlichen Gangstufen einer Getriebebaueinheit in Abhängigkeit von verschiedenen, auf die Betriebsweise des Fahrzeuges, insbesondere des Fahrverhaltens einflußnehmenden Größen, dadurch charakterisiert, daß aus wenigstens einem Teil der Kennwerte wenigstens eines Basisschaltprogrammes durch das Setzen eines Offsets, d.h. einer Abweichungsvariablen bestimmter Größe für einen, das Schaltprogramm charakterisierenden Kennwert, die Kennwerte der weiteren Schaltprogramme aus den Kennwerten des Basisprogrammes entwickelt werden. Die Abweichungsvariable wird dabei als Kennwert-Offset bezeichnet. Dies bedeutet im einzelnen, daß die Kennwerte eines Basisprogrammes, welche einen Gangstufenwechsel charakterisieren, durch einfache mathematische Operation mit der Abweichungsvariablen, d.h. dem Kennwert-Offset, zu den Kennwerten der theoretisch möglichen und beliebig wählbaren Schaltprogramme führen. Im einfachsten Fall werden als die ein Schaltprogramm charakterisierenden Kennwerte die Schaltdrehzahlen in den Ausgangsgängen und/oder der Zieldrehzahlen im Zielgang, d.h. der einzulegenden Gangstufe, in Abhängigkeit der von auf die Betriebsweise des Fahrzeuges, inbesondere das Fahrverhalten Einfluß ausübenden Größen angesehen. Andere Kennwerte sind ebenfalls denkbar.

Die erfindungsgemäße Lösung bietet den Vorteil, daß lediglich nur noch zumindest ein Basisschaltprogramm bzw. die dieses charakterisierenden Kennwerte in einer, der Getriebebaueinheit in irgendeiner Weise zugeordneten Steuereinrichtung, d.h. entweder einer direkt zugeordneten oder einer der Steuereinrichtung der Getriebebaueinheit übergeordneten Steuereinrichtung oder einer von mehreren Komponenten des Antriebsstranges gemeinsam genutzten Steuereinrichtung oder einer dieser Steuereinrichtung nebengeordneten Steuereinrichtung hinterlegt werden muß, und die einzelnen theoretisch möglichen Schaltprogramme auf einfache Art und Weise schnell und unkompliziert ohne aufwendige Berechnungen für die Größe des Offsets und damit 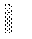 ohne Beanspruchung von zusätzlichem Speicherplatz aus dem Basisprogramm entwickelt und diese eingestellt werden, d. h. kein stufenloser Übergang erfolgt.

Nachfolgend werden einige Begriffe hinsichtlich ihrer Bedeutung erläutert:
1) Basisschaltprogramm
   - Kennlinie oder Mehrzahl von Kennlinien bzw. Kennfeld, welches die möglichen Schaltlinien charakterisiert
2) Kennwert
   - der eine Schaltlinie oder einen Teil dieser charakterisierenden Größe und damit auch die Kennlinien/das Kennfeld des Basisschaltprogrammes.
   - kann dabei beispielsweise die Drehzahl sein.
3) Offset
   - ein Sprung, sprungartige Änderung
4) Kennwert-Offset
   - sprungartige Änderung der Kennwerte einer Schaltkennlinie, beispielsweise der eine Schaltlinie charakterisierenden Drehzahlen

Im einfachsten und anzustrebenden Fall ist jedes der theoretisch möglichen Schaltprogramme durch ein Kennwert-Offset bestimmter Größe aus einem Basisprogramm entwickelbar. Dabei ist es unerheblich, ob das einzelne Schaltprogramm durch eine Mehrzahl unterschiedlicher Kennwerte über den Geschwindigkeitsbereich in Abhängigkeit der Laststufen charakterisiert ist oder über den gesamten Geschwindigkeitsbereich eine eindeutige Kennwertzuordnung unabhängig von den Laststufen erfolgt. Im erstgenannten Fall ist dabei jedes Schaltprogramm in grafischer Darstellung durch eine Mehrzahl von Schaltkennlinien zur Abdeckung des Geschwindigkeitsbereiches beschreibbar, während im zweiten Fall lediglich eine einzige 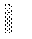 Schaltkennlinie für den gesamten Geschwindigkeitsbereich genutzt wird.

In beiden Fällen kann jedes theoretisch mögliche weitere Schaltprogramm durch lediglich ein Kennwert-Offset bestimmter Größe beschrieben werden.

Bei Ausführungen von Schaltprogrammen, welche in grafischer Darstellung durch eine Mehrzahl von Schaltkennlinien für unterschiedliche Laststufen charakterisiert sind, besteht zusätzlich die Möglichkeit, zur Erzeugung eines weiteren theoretisch möglichen Schaltprogrammes unterschiedliche Kennwert-Offsets in Abhängigkeit der Schaltkennwerte von der Laststufe zu nutzen. Dies bedeutet im einzelnen, daß den sich für unterschiedliche Laststufen ergebenden Kennwerten jeweils unterschiedliche Offsets zugewiesen werden.

Das Kennwert-Offset kann sich dabei entsprechend der vorgegebenen Kennwerte beispielsweise
a) auf die Schaltdrehzahl im Ausgangsgang oder
b) auf die zu erreichende Zieldrehzahl im neu einzulegenden Zielgang beziehen. Dies ist abhängig von der Charakterisierung der Schaltprogramme.

Die erfindungsgemäße Lösung ist sowohl für Schaltprogramme mit festen Umschaltpunkten als auch beschleunigungsabhängige Schaltprogramme, d.h. Schaltprogramme mit variablen Umschaltpunkten in Abhängigkeit von der Beschleunigung des Fahrzeuges, anwendbar. Bei diesen Programmen wird ein Schaltdrehzahlbereich vorgegeben, so daß wenigstens eine Zieldrehzahl im Zielgang erreicht wird, oder bei Vorgabe wenigstens zweier Zieldrehzahlen - einer unteren und einer oberen Zieldrehzahl - sich ein abgestufter Kennlinienverlauf im Beschleunigungs-/Abtriebsdrehzahldiagramm ergibt. Im ersten Fall ist dabei im Ausgangsgang ein Schaltdrehzahlbereich vorgesehen, in welchem eine Umschaltung in den Zielgang derart erfolgt, daß bei Vorliegen einer Beschleunigungskomponente immer nur eine bestimmte Motor- bzw. Antriebsdrehzahl, die sogenannte Zieldrehzahl, erreicht wird. Dies ist jedoch nur für kleine Schaltdrehzahlbereiche möglich. Daher wird vorzugsweise der zweite Fall angewandt, bei welchem die beiden Grenzzustände - geringe Fahrzeugbelegung bei ebenem oder abschüssigem Gelände und hohe Fahrzeugbelegung bei ansteigendem Gelände - berücksichtigt werden. Bei hoher Beschleunigung wird dabei der Umschaltvorgang bei geringeren Schaltdrehzahlen, d.h. früher, eingeleitet, als bei einem konventionellen Schaltprogramm mit festen Umschaltpunkten unter der Voraussetzung, daß gleiche Zieldrehzahlen im Zielgang erreicht werden sollen. Ansonsten, d.h. bei Einleitung des Schaltvorganges bei gleicher Schaltdrehzahl wird eine Verschiebung der erreichten Drehzahl zu höheren Antriebs- bzw. Motordrehzahlen hin stattfinden. Bei geringer Beschleunigung und hoher erforderlicher Leistung erfolgt die Umschaltung in den nächsthöheren Gang bei höheren Antriebs- bzw. Motordrehzahlen, die jedoch kleiner sind als bei einem konventionellen Schaltverfahren.

Die Kennwert-Offsets für die Bereitstellung der einzelnen theoretisch möglichen Schaltprogramme können dabei derart gewählt werden, daß diese entweder zwischen den Kennwerten der einzelnen theoretisch möglichen Schaltprogramme gleiche Abstände bzw. Abweichungen bedingen oder aber unterschiedliche Abweichungen. Die einzelnen Kennwert-Offsets können
a) frei wählbar oder
b) hinsichtlich ihrer Größe festlegbar sein oder
c) eine bestimmte Größe aufweisen, die wiederum entweder fest vorgegeben oder frei bestimmbar sein kann.
Die Größe der Offsets vom Basisschaltprogramm kann dabei in Abhängigkeit wenigstens einer der nachfolgend beispielhaft genannten, auf das Fahrverhalten Einfluß ausübenden Größen gebildet werden:
a) Topographie
b) Beladungszustand
c) Fahrerwunsch
d) Fahrstrecke
e) Kraftstoffverbrauch
f) Art des Fahrzeuges
g) zur Verfügung stehende Motorleistung
h) Fahrweise, Fahrverhalten
Vorzugsweie berücksichtigt die Größe des Offsets eine Kombination der auf das Fahrverhalten Einfluß nehmbaren Größen.

Bezüglich der Bereitstellung der Kennwerte eines bestimmten theoretisch möglichen Schaltprogrammes bestehen im wesentlichen zwei Grund möglichkeiten:
a) Setzen des Kennwert-Offsets immer von den Kennwerten des Basisschaltprogrammes ausgehend oder
b) Setzen des Kennwert-Offsets ausgehend vom letzten, d.h. aktuell gewähltem theoretisch möglichen Schaltprogramm.

Im erstgenannten Fall wird das auf der Basis der Kennwerte des Basisprogrammes erzeugte und aktuell nutzbare theoretisch mögliche Schaltprogramm als erstes theoretisch mögliches Schaltprogramm bezeichnet, wobei bei erforderlicher oder gewünschter Neuwahl eines zweiten theoretisch möglichen Schaltprogrammes ein Rücksetzen des Offsets auf das Basisprogramm erfolgt und das zweite theoretisch mögliche Schaltprogramm durch erneutes Setzen eines anderen Kennwert-Offsets erzeugt wird. Diese Möglichkeit bietet den Vorteil, daß durch das Zurücksetzen kein Speicherplatz für eine Zwischenspeicherung des ersten theoretisch möglichen Schaltprogrammes als Ausgangsbasis für die Erzeugung der Kennwerte des zweiten theoretisch möglichen Schaltprogrammes benötigt wird. Die andere Möglichkeit besteht darin, daß aus den Kennwerten das Basisprogramm durch Setzen eines Offsets die Kennwerte eines ersten theoretisch möglichen Schaltprogrammes gebildet werden und bei gewünschter oder erforderlicher Neuwahl eines weiteren zweiten theoretisch möglichen Schaltprogrammes das Offset auf der Basis des ersten theoretisch möglichen Schaltprogrammes gesetzt wird und ausgehend von diesem das Offset eine Veränderung der Kennwerte in Richtung des zweiten theoretisch möglichen Schaltprogrammes bewirkt. Diese Möglichkeit ist dann von Vorteil, wenn die einzelnen Kennwerte der theoretisch möglichen Schaltprogramme jeweils vom nächsten theoretisch möglichen Schaltprogramm die gleiche Abweichung besitzen, so daß lediglich ein einziges Offset für das Überstreichen des gesamten Geschwindigkeitsbereiches zur Auswahl der einzelnen Schaltprogramme erforderlich ist.

Entscheidend für den Endverbraucher, das heißt insbesondere den Betreiber eines Fahrzeuges, ist, daß diesem auf einfache Art und Weise die Möglichkeit gegeben wird, entsprechend den Einsatzerfordernissen das optimale Schaltprogramm für das Fahrzeug leicht 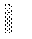 auszuwählen und einzustellen. Dabei ist zu berücksichtigen, daß eine überschaubare Anzahl von theoretisch möglichen Schaltprogrammen offeriert wird, so daß ständige Wechsel nicht erforderlich sind und durch Vorwahl ein entsprechendes Programm ausgewählt werden kann.

Unter einem weiteren Aspekt der Erfindung besteht die Möglichkeit, im Rahmen einer bereits im Fahrzeug erfolgenden Auswertung hinsichtlich des Fahrverhaltens, beispielsweise über eine der Getriebebaueinheit zugeordnete Steuereinrichtung oder eine dieser übergeordneten Steuereinrichtung bei Vorwahl einer bestimmten Fahrweise - beispielsweise leistungsorientiert oder verbrauchsoptimiert - durch den Fahrer oder Betreiber oder ereignisorientiert, beipsielsweise beim Auftreten von Pendelschaltungen, ein automatisches Setzen des Offsets unabhängig von einer evt. erfolgten manuellen Vorwahl eines neuen theoretisch möglichen Schaltprogrammes durch den Fahrer durchzuführen.

Gemäß einer weiteren vorteilhaften Ausführung können auch innerhalb der unterschiedlichen Kennlinien für unterschiedliche Laststufen eines einzelnen Schaltprogrammes zusätzlich 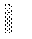 unterschiedliche Offsets gesetzt werden. Diese Lösung ermöglicht eine optimale Anpassung der einzelnen Schaltprogramme.

Bezüglich des zeitlichen Ablaufs der Bildung der Kennwerte der theoretisch möglichen Schaltprogramme aus einem Basisschaltprogramm bestehen mehrere Möglichkeiten. So werden entweder bei Vorhandensein eines Wunsches oder einer Forderung nach Änderung des Schaltprogrammes, d.h. Einstellung eines theoretisch möglichen Schaltprogrammes alle Kennwerte für alle Laststufen und Gangstufenwechsel gebildet und gespeichert oder aber jeweils bei Bedarf, d.h. beim konkret auftretenden Ereignis einer geforderten Umschaltung zwischen einem ersten Ausgangsgang und einem zweiten Zielgang die konkret für die Laststufe und den Gangwechsel agestimmte Kennlinie des theoretisch möglichen Schaltprogrammes.

Vorrichtungsmäßig erfolgt die Bereitstellung einer Mehrzahl unterschiedlicher Schaltprogramme entweder
a) in der der Getriebebaueinheit zugeordneten Steuereinrichtung oder
b) in einer, einer Mehrzahl von Antriebskomponenten zugeordneten Steuereinrichtung, wobei die Getriebebaueinheit eine Antriebskomponente bildet oder
c) einer übergeordneten Fahrsteuerung.

Die entsprechende Steuereinrichtung, deren Ausgang beziehungsweise Ausgänge mit den Stelleinrichtungen der Betätigungselemente zur Steuerung des Gangstufenwechsels in der Getriebebaueinheit gekoppelt sind, umfaßt mindestens eine Speichereinrichtung, in welcher die ein Basisschaltprogramm wenigstens mittelbar charakterisierenden Kennwerte hinterlegt sind. Des weiteren umfaßt die Steuereinrichtung eine Offset-Setzeinrichtung, welche für die theoretisch möglichen zur Verfügung stehenden Schaltprogramme jeweils mindestens ein Offset in Form einer Abweichungsvariablen aus einem Speicher entnimmt und den Kennwerten des Basisschaltprogrammes oder den Kennwerten des aktuellen Schaltprogrammes hinzufügt.

Die erfindungsgemäße Lösung bietet den Vorteil, daß eine Mehrzahl von unterschiedlichen Schaltprogrammen schnell aus einem Basisschaltprogramm entwickelbar sind.

Für die erfindungsgemäße Lösung ist es unerheblich, welcher Art das Basisschaltprogramm ist. Es kann sich dabei sowohl um ein Schaltprogramm mit festen Umschaltpunkten oder ein Schaltprogramm mit variablen Umschaltpunkten, beispielsweise ein beschleunigungsabhängiges Schaltprogramm handeln. Entscheidend ist, daß aus wenigstens einem Basisprogramm, welches entsprechend den einzelnen Geschwindigkeitsbereichen zugeordnete Schaltkennlinien für unterschiedliche Laststufen aufweisen kann, durch Setzen des Kennwert-Offsets ein anderes weiteres Schaltprogramm entwickelt werden kann, wobei dadurch eine Verschiebung der Kennwerte der einzelnen für unterschiedliche Laststufen des Basisschaltprogrammes vorgegebene Schaltkennlinien über den Geschwindigkeitsbereich hin ergibt. Werden als Kennwerte die Anschlußdrehzahlen im Zielgang angesehen, erwirkt das Anschlußdrehzahlen-Offset eine Verschiebung der einzustellenden Anschlußdrehzahlen im nächsthöheren Gang um die Größe des Anschlußdrehzahlen-Offsets.Begrenzt wird diese Möglichkeit durch die Auslegung der mit der Getriebebaueinheit gekoppelten Antriebsmaschine.

Die erfindungsgemäße Lösung wird nachfolgend anhand von Figuren erläutert. Darin ist im einzelnen folgendes dargestellt:
- Figuren 1a und 1b: verdeutlichen anhand eines Beispieles einander gegenübergestellt die Kennwerte eines Basisschaltprogrammes für einen bestimmten Geschwindigkeitsbereich für unterschiedliche Laststufen für den Einsatz zur Steuerung von Getriebebaueinheiten beim Wechsel zwischen zwei Gangstufen und die Kennwerte eines durch ein Kennwert-Offset erzielten theoretisch möglichen Schaltprogrammes;
- Figur 2: verdeutlicht anhand eines Blockschaltbildes den Aufbau einer Steuervorrichtung und das Verfahren zur Bereitstellung einer Mehrzahl unterschiedlicher Schaltprogramme.

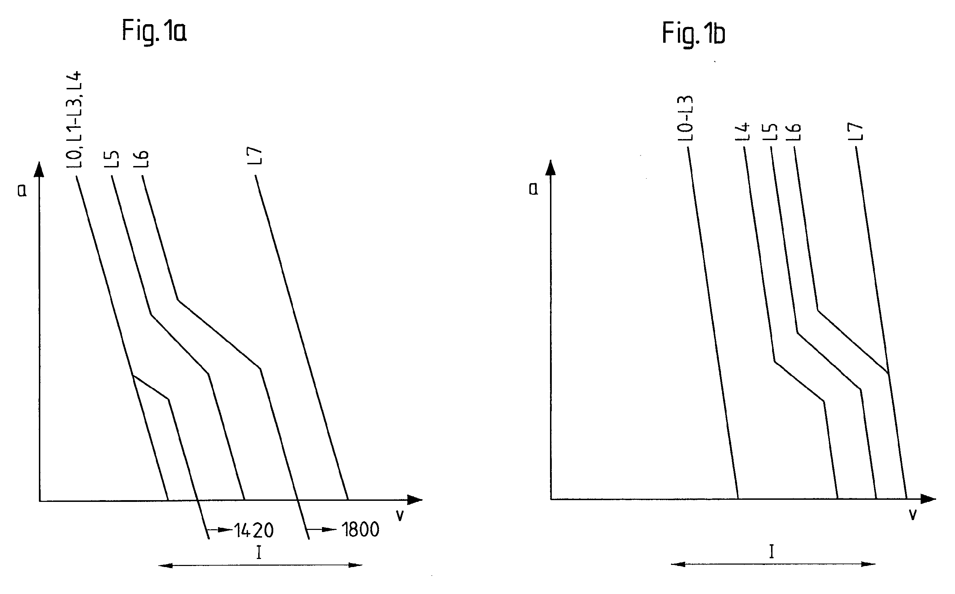

Die Figur 1 verdeutlicht anhand eines Beschleunigungs-Geschwindigkeitsdiagrammes (a-v-Diagramm) für einen Geschwindigkeitsbereich I die sich aus den Kennwerten ergebenden Schaltkennlinien zur Ansteuerung einer Getriebebaueinheit, insbesondere der Betätigungselemente zum Wechsel der Gangstufen für unterschiedliche Laststufen L0 bis L3, L4 bis L6 und L7. Diese einzelnen jeweils für die unterschiedlichen Laststufen L0 bis L7 vorgegebenen Schaltkennlinien bilden dabei das Basisschaltprogramm. Die Kennwerte für das Basisschaltprogramm müssen dabei nicht zwangsläufig in Form von Kennlinien vorgegeben werden, sondern können beispielsweise auch in Tabellenform vorgegeben werden. Der konkrete Kennlinienverlauf gemäß Figur 1 ist beispielhaft gewählt. Bei diesem Schaltprogramm handelt es sich jedoch um den bevorzugten Anwendungsfall eines beschleunigungsabhängigen Schaltprogrammes, wobei zumindest die Schaltkennlinie für den mittleren Geschwindigkeitsbereich für die Laststufen L4 bis L6 zwei Knickpunkte aufweist, während die Kennlinie für die Laststufen L0 bis L3 beziehungsweise die Kennlinie für die Laststufe L7 den Extremfall einer verbrauchsoptimierten Variante in Form einer relativ steil abfallenden Gerade wiedergeben. Für das Beschleunigungs-Antriebsdrehzahldiagramm, wobei die Abtriebsdrehzahl proportional zur Fahrzeuggeschwindigkeit v ist, weist die Schaltkennlinie einen gestuften Verlauf mit den zwei Knickpunkten (a_max; a_min) auf, wobei die Steigung der Schaltkennlinie für die Beschleunigungswerte a_min < a < a_max betragsmäßig stets ≤ der Steigung der Schaltkennlinie für Beschleunigungswerte a ≤ a_min oder a ≥ a_max ist, also stets gilt:
| n₂(a₁) | ≤ n₂ (a₂) | wobei
a₁ ∈ [a_min < a < a_max] und
a₂ ∈ ]a_max < a < ∞[ oder
a₂ ∈ [0 < a < a_min[

Die Figur 1b verdeutlicht über den Geschwindigkeitsbereich I den Einfluß auf die Kennwerte durch das Setzen eines Kennwert-Offsets anhand der durch das Kennwert-Offset sich ergebenden Kennlinien eines erstentheoretisch möglichen Schaltprogrammes. Daraus ist ersichtlich, daß das Offset eine Verschiebung der Kennwerte im Beschleunigungs-Geschwindigkeitsdiagramm beispielsweise in Richtung höherer Anschlußdrehzahlen erzeugen. Die Grenze dafür bildet die Auslegung der Antriebsmaschine, so daß nicht für alle Laststufen Verschiebungen in dem gleichen Maße gewünscht und realisierbar sind. Im dargestellten Fall werden die Kennlinien der unterschiedlichen Laststufen des ersten theoretisch möglichen Schaltprogrammes durch jeweils den einzelnen Laststufen unterschiedlich zugeordnete Offsets gebildet.

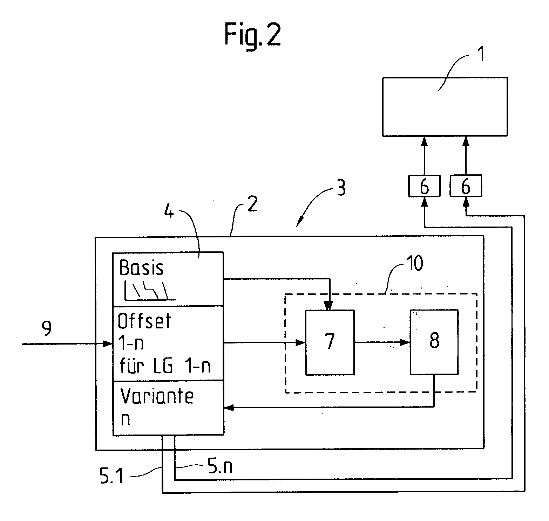

Die Figur 2 verdeutlicht anhand eines Blockschaltbildes eine einer Getriebebaueinheit 1 zugeordnete Steuereinrichtung 2, welche Bestandteil einer Steuervorrichtung 3 zur Ansteuerung der Stellglieder der Betätigungselemente (Kupplung, Bremseinrichtung) zum Wechsel zwischen den einzelnen Gangstufen ist. Die Steuereinrichtung umfaßt eine Speichereinrichtung 4, in welcher die Kennwerte für mindestens ein Basisschaltprogramm hinterlegt sind. Diese Kennwerte können dabei beispielsweise in Form von Schaltkennlinien, Tabellen oder ähnlichem hinterlegt werden. Beispielsweise erfolgt die Hinterlegung von Schaltkennlinien in Form von sogenannten Beschleunigungs-Geschwindigkeitsdiagrammen, denen die Anschlußdrehzahlen in den nächsten einzulegenden Gängen entnehmbar sind. Andere Möglichkeiten bestehen darin, daß die Schaltdrehzahlen im aktuellen Gang, bei welchem ein Schaltvorgang eingeleitet wird, hinterlegt sind. Dies hängt jedoch von der Wahl des gewünschten Schaltprogrammes ab. Vorzugsweise findet die erfindungsgemäße Lösung jedoch für beschleunigungsabhängige Schaltprogramme Verwendung, bei denen in Abhängigkeit der äußeren Gegebenheiten beziehungsweise des Betriebszustandes des Fahrzeuges eine bestimmte Anschlußdrehzahl im nächsten einzulegenden Gang das Kriterium für die Ansteuerung der Stellglieder der Betätigungselemente und damit die Bildung der Stellgröße bildet. Die Kopplung der Steuereinrichtung 2 mit den Stellgliedern der Getriebebaueinheit 1 erfolgt über mindestens einen Ausgang bei serieller Datenübertragung oder eine Mehrzahl von Ausgängen bei paralleler Datenübertragung, hier als 5.1 bis 5.n bezeichnet. Diese Ausgänge sind mit den Stellgliedern 6 verbunden. In der Steuereinrichtung 2 ist des weiteren eine Kennwert-Offset-Setzeinrichtung 7 vorgesehen, welche vorzugsweise auf unterschiedliche Kennwert-Offsets zugreift, beispielsweise in einer dieser zugeordneten Speichereinrichtung, wobei es sich bei dieser Speichereinrichtung auch um die Speichereinrichtung für die Schaltkennlinien des Basisschaltprogrammes handeln kann oder aber eine separate Speichereinrichtung, wobei erstgenannte Möglichkeit in der Figur dargestellt ist. Dabei werden vorzugsweise bei beschleunigungsabhängigen Schaltprogrammen für unterschiedliche Laststufen LG unterschiedliche Offsets für die Bildung der theoretisch möglichen Schaltprogramme vorgesehen. Vorzugsweise sind die Offsets derart gewählt, daß zwischen den einzelnen theoretisch möglichen Schaltprogrammen (Variante 1 bis n) für die Schaltkennlinien beziehungsweise Kennwerte für eine bestimmte Laststufe immer gleiche Kennwert-Offsets verwendet werden. Eine denkbare und besonders vereinfachte Lösung besteht darin, daß die Offsets für alle Laststufen gleich sind. Aus dem Basisschaltprogramm wird über die Kennwert-Offset-Setzeinrichtung 7 durch mathematische Verknüpfung in einer Schaltprogrammbildungseinrichtung 8 entweder einen Teil des gewünschten theoretisch möglichen Schaltprogrammes in Form beispielsweise der Schaltkennlinie für einen bestimmtem Gangstufenwechsel und eine bestimmte Laststufe, hier als Variante n bezeichnet, gebildet, das in einer Speichereinrichtung - separate Speichereinrichtung oder aber in der Speichereinrichtung 4 - hinterlegt werden kann. Oder es werden, hier nicht dargestellt, alle Kennlinien des theoretisch möglichen Schaltprogrammes (für jeden Gangstufenwechsel und jede Laststufe) gebildet und in einem Speicher hinterlegt. Diese Kennlinie oder das gesamte Schaltprogramm bildet dann in Abhängigkeit der hier nicht dargestellten Eingangsgrößen und des Fahrerwunsches nach Wechsel des Schaltprogrammes in der Steuereinrichtung 2 das zur Ansteuerung der Getriebebaueinheit 1 verwendete Schaltprogramm, auf dessen Grundlage die Stellgrößen für die Stellglieder 6 der Betätigungselemente der Getriebebaueinheit 1 gebildet werden. Kennwert-Offset-Setzeinrichtung 7 und Schaltprogrammbildungseinrichtung 8 können auch zu einer baulichen Einheit 10, hier mittels unterbrochener Linie dargestellt, zusammengefaßt sein.

Vorzugsweise wird eine Ausführung angestrebt, bei der die Kennwert-Offsetsetzeinrichtung 7 nicht das komplette theoretisch mögliche Schaltprogramm aus dem Basisschaltprogramm erzeugt und dem Offset erzeugt und es im Speicher ablegt, sondern nur die aktuelle Schaltkennlinie, d.h. beispielsweise die für eine Schaltung vom 2. in den 3. Gang und Laststufe 5 gültige Schaltkennlinie. Dies bedeutet, daß nicht das gesamte Basischaltprogramm herangezogen wird, sondern nur die im Augenblick maßgebliche Schaltkennlinie, wobei in Verbindung mit dem zugehörigen Offset die neue Schaltkennlinie des theoretisch möglichen Schaltprogrammes gebildet wird. Diese Lösung bietet den Vorteil, daß nur die Offsets gespeichert werden müssen und kein zusätzlicher Speicherbedarf für das gesamte theoretisch mögliche Schaltprogramm erforderlich ist.

Desweiteren ist es möglich, das automatisch in Abhängigkeit einer bereits in der Steuereinrichtung 2 der Getriebebaueinheit 1 erfolgenden Auswertung entsprechend einer gewählten Betriebsweise -verbrauchsorientiert oder leistungsorientiert - das geeignete Schaltprogramm gewählt und eingestellt wird. Die andere Variante besteht darin, daß von seiten des Fahrers oder des Betreibers nach der Fahrt beziehungsweise mehreren Fahrten entschieden wird, ob das eingestellte Schaltprogramm, welches in der Regel zuallererst das Basisschaltprogramm ist, den Anforderungen genügt und damit ein optimales Fahrverhalten hinsichtlich der zur Verfügung stehenden Leistung oder des Verbrauches erzielt werden kann. Ist dies nicht der Fall, erfolgt von seiten des Fahrers oder des Betreibers eine Entscheidung hinsichtlich der Änderung des Schaltprogrammes. Dabei ist ihm zumindest bekannt, daß eine bestimmte Anzahl von Schaltprogrammen 1-n im Geschwindigkeitsbereich I zur Verfügung steht. Er kann dann durch Vorgabe des gewünschten Schaltprogrammes über einen Eingang 9 an der Steuereinrichtung der Kennwert-Offset-Setzeinrichtung 7 wenigstens indirekt ein Signal zum Setzen eines bestimmten Offsets zur Erzielung des gewünschten Schaltprogrammes zuführen, wobei in Abhängigkeit des ausgewählten Schaltprogrammes vom Basisschaltprogramm und den dazwischenliegenden Schaltprogrammen das Offset in entsprechender Anzahl gesetzt wird. Dies bedeutet beispielsweise, daß bei Vorsehen von acht unterschiedlichen Schaltprogrammen über die Kennwert-Offset-Setzeinrichtung 7 aus dem Basisschaltprogramm und bei gewünschtem einzustellendem theoretisch möglichem fünften Schaltprogramm die Kennwert-Offset-Setzeinrichtung 7 das Kennwert-Offset viermal setzt und damit zum theoretisch möglichen fünften Schaltprogramm gelangt. Das gewählte theoretisch mögliche Schaltprogramm, welches im Index mit n bezeichnet wird, kann dabei durch Multiplikation des Kennwert-Offsets mit n-1 und Addition des Ergebnisses mit den Kennwerten des Basisschaltprogrammes gebildet werden.

Bei der Steuereinrichtung 2 handelt es sich im einfachsten Fall um die Steuereinrichtung der Getriebebaueinheit 1. Denkbar wäre jedoch auch die Nutzung einer übergeordneten Fahrsteuerung.

### Bezugszeichenliste

- 1: Getriebebaueinheit
- 2: Steuereinrichtung
- 3: Steuervorrichtung
- 4: Speichereinrichtung
- 5: Ausgänge der Steuereinrichtung
- 6: Stellglieder
- 7: Kennwert-Offset-Setzeinrichtung
- 8: Schaltprogrammbildnereinrichtung
- 9: Eingang der Steuereinrichtung

## Patentansprüche

1. Verfahren zur Bereitstellung einer Mehrzahl unterschiedlicher Schaltprogramme zur Steuerung des Wechsels zwischen unterschiedlichen Gangstufen einer Getriebebaueinheit in Abhängigkeit von verschiedenen, auf die Betriebsweise des Fahrzeuges, insbesondere des Fahrverhaltens einflußnehmenden Größen, bei welchem die, wenigstens ein Basisschaltprogramm charakterisierenden Kennwerte fest vorgegeben sind und wenigstens ein Teil der Kennwerte jedes weiteren theoretisch möglich nutzbaren Schaltprogrammes durch Setzen eines Kennwert-Offsets aus dem Basisschaltprogramm erzeugbar sind.

2. Verfahren nach Anspruch 1, **dadurch gekennzeichnet, daß** das erzeugbare theoretisch möglich nutzbare Schaltprogramm vorwählbar ist und entsprechend der Vorwahl das diesem Schaltprogramm zugeordnete Kennwert-Offset gesetzt wird.

3. Verfahren nach Anspruch 1 oder 2, **gekennzeichnet durch** die folgenden Merkmale:
3.1 bei welchem das aus den Kennwerten des Basisprogrammes erzeugte Schaltprogramm ein erstes theoretisch mögliches Schaltprogramm bildet;
3.2 bei welchem bei geforderter oder gewünschter Neuwahl eines weiteren zweiten theoretisch möglichen Schaltprogrammes ein Rücksetzen des Kennwert-Offsets auf das Basisprogramm erfolgt und das zweite theoretisch mögliche Schaltprogramm **durch** Setzen eines zweiten Kennwert-Offsets erzeugt wird.

4. Verfahren nach Anspruch 1 oder 2, **gekennzeichnet durch** die folgenden Merkmale:
4.1 bei welchem das aus den Kennwerten des Basisprogrammes erzeugte Schaltprogramm als erstes theoretisch mögliches Schaltprogramm fungiert;
4.2 bei welchem bei geforderter oder gewünschter Neuwahl eines zweiten weiteren theoretisch möglichen Schaltprogrammes das Setzen des Kennwert-Offsets auf Basis des ersten theoretisch möglichen Schaltprogrammes erzeugt wird.

5. Verfahren nach einem der Ansprüche 1 bis 4, **dadurch gekennzeichnet, daß** die Größe eines jeden Kennwert-Offsets fest vorgegeben ist.

6. Verfahren nach einem der Ansprüche 1 bis 4, **dadurch gekennzeichnet, daß** die Größe der Kennwert-Offsets frei wählbar ist.

7. Verfahren nach einem der Ansprüche 1 bis 6, **dadurch gekennzeichnet, daß** die Größe des Kennwert-Offsets in Abhängigkeit einer gewählten Betriebs- bzw. Fahrweise des Fahrzeuges automatisch aus den, das Fahrverhalten charakterisierenden Größen abgeleitet wird.

8. Verfahren nach einem der Ansprüche 1 bis 7, **gekennzeichnet durch** die folgenden Merkmale:
8.1 bei welchem die Kennwerte des Basisschaltprogrammes eine Kennlinie für alle Laststufen über den gesamten Geschwindigkeitsbereich beschreiben;
8.2 bei welchem ein Kennwert-Offset für den gesamten Geschwindigkeitsbereich gesetzt wird.

9. Verfahren nach einem der Ansprüche 1 bis 7, **gekennzeichnet durch** die folgenden Merkmale:
9.1 bei welchem die Kennwerte des Basisschaltprogrammes über den gesamten Geschwindigkeitsbereich für unterschiedliche Laststufen **durch** verschiedene Schaltkennlinien beschreibbar sind;
9.2 bei welchem jeder Schaltkennlinie ein gleiches Kennwert-Offset zuordenbar ist.

10. Verfahren nach einem der Ansprüche 1 bis 7, **gekennzeichnet durch** die folgenden Merkmale:
10.1 bei welchem die Kennwerte des Basisschaltprogrammes über den gesamten Geschwindigkeitsbereich für unterschiedliche Laststufen **durch** verschiedene Schaltkennlinien beschreibbar sind;
10.2 bei welchem jeder Schaltkennlinie ein unterschiedliches Kennwert-Offset zuordenbar ist.

11. Verfahren nach einem der Ansprüche 1 bis 10, **dadurch gekennzeichnet, daß** das Basisschaltprogramm ein Schaltprogramm mit festen Umschaltpunkten ist.

12. Verfahren nach einem der Ansprüche 1 bis 10, **dadurch gekennzeichnet, daß** das Basisschaltprogramm ein beschleunigungsabhängiges Schaltprogramm ist.

13. Verfahren nach Anspruch 12, **dadurch gekennzeichnet, daß** die das Basisschaltprogramm charakterisierenden Kennwerte von den Anschlußdrehzahlen im nächsthöheren oder nächstniedrigeren Gang gebildet werden und das Kennwert-Offset für die Anschlußdrehzahl gesetzt wird.

14. Verfahren nach einem der Ansprüche 1 bis 13, **dadurch gekennzeichnet, daß** das zu erzeugende theoretisch mögliche Schaltprogramm durch mathematische Operation der Kennwerte des Basisschaltprogrammes mit dem Kennwert-Offset gebildet wird.

15. Verfahren nach einem der Ansprüche 1 bis 14, **dadurch gekennzeichnet, daß** für ein gewähltes theoretisch mögliches Schaltprogramm die Kennwerte oder Kennlinien für unterschiedliche Gangstufenwechsel jeweils erst bei Auftreten eines gewünschten oder geforderten Gangstufenwechsels aus dem Basisschaltprogramm gebildet werden.

16. Verfahren nach einem der Ansprüche 1 bis 14, **dadurch gekennzeichnet, daß** für ein gewähltes theoretisch mögliches Schaltprogramm die Kennwerte oder Kennlinien aller unterschiedliche Gangstufenwechsel bei gewünschter Änderung des Schaltprogrammes aus dem Basisschaltprogramm gebildet werden.

17. Steuereinrichtung zur Bereitstellung einer Mehrzahl unterschiedlicher Schaltprogramme zur Steuerung des Wechsels zwischen unterschiedlichen Gangstufen einer Getriebebaueinheit in Abhängigkeit von verschiedenen, auf die Betriebsweise des Fahrzeuges, insbesondere des Fahrverhaltens einflußnehmenden Größen,
17.1 mit einer Speichereinrichtung zur Hinterlegung der Kennwerte wenigstens eines Basisschaltprogrammes;
17.2 mit einer Kennwert-Offsetsetzeinrichtung;
17.3 mit einem Schaltprogrammbildner zur Bildung des gewünschten Schaltprogrammes durch mathematische Operation des Kennwert-Offsets;
17.4 mit einer Speichereinrichtung zur wenigstens zeitweisen Speicherung der Kennwerte oder Kennlinien des erzeugten Schaltprogrammes.

18. Steuereinrichtung nach Anspruch 17, **dadurch gekennzeichnet, daß** Kennwert-Offsetsetzeinrichtung und Schaltprogrammbildner zu einer baulichen Einheit zusammengefaßt sind.

19. Steuereinrichtung nach einem der Ansprüche 17 oder 18, **dadurch gekennzeichnet, daß** die Speichereinrichtung zur wenigstens zeitweisen Speicherung der Kennwerte oder Kennlinien des erzeugten Schaltprogrammes von der Speichereinrichtung gebildet wird, in der das Basisschaltprogramm hinterlegt ist.

20. Steuereinrichtung nach einem der Ansprüche 17 bis 19, **dadurch gekennzeichnet, daß** zur Vorwahl eines bestimmten Schaltprogrammes ein Eingang zur Zufuhr eines den Wunsch nach Vorwahl eines bestimmten Schaltprogrammes charakterisierenden Signales vorgesehen ist.
